# EUROPEAN PATENT APPLICATION

(11) **EP 1 830 537 A1**
(43) Date of publication of application: **05.09.2007**
(21) Application number: 06110612.6
(22) Date of filing: 02.03.2006
(51) Int. Cl.: H04L 29/06

(54) **Communications system, mobile node apparatus, and method of performing a handover**

(71) Applicant: Agilent Technologies, Inc., Santa Clara, CA 95051 (US)
(72) Inventor: Garcia, Francisco Javier, South Queensferry, Lothian EH30 9TG (GB); Gardner, Robert, South Queensferry, Lothian EH30 9TG (GB)
(74) Representative: Coker, David Graeme

(57) **Abstract**

A communications system comprises a first network node (102) and a second network node (110). A mobile node (108) attached to the first network node (102) hands over from communicating with the first network node (102) at a link layer (208) of a protocol stack to communicating with the second network node (110) by performing a link layer handover procedure. Thereafter, the link layer (208) of the mobile node (108) interrogates incoming packets to identify a router advertisement packet (300) broadcast by the second network node (110). Upon receipt of the packet (300), the link layer (208) modifies the packet (300) to include trigger information (518) in an IPv6 Destination Options Extension Header (508). The packet (300) is then passed up the protocol stack to a network layer (210) thereof, where the modified packet (300) is recognised as containing the trigger information (518) and a network layer handover procedure is initiated in response to receipt of the modified packet (300).

## Description

The present invention relates to a method of performing a handover of the type, for example, to transfer communications of a first network node with a mobile node to a second network node. The present invention also relates to a communications system of the type, for example, comprising a mobile node capable of communicating with a first network node that can hand over to a second mobile node. The present invention further relates to a mobile node apparatus of the type, for example, that is capable of communicating with a first network node that hands over to a second network node.

### Background Art

In the field of wireless communications, in particular wireless packet-switched communications, a handover procedure is provided to enable a Mobile Internet Protocol version 6 (IPv6)-enabled node roaming from a first Wireless Local Area Network (LAN) access point to a second Wireless LAN access point. The handover procedure typically takes in the order of a few seconds to complete. However, in order to be perceptually acceptable during, for example, a voice call, completion of the handover process needs to be reduced to considerably less than one second, for example as little as a third of a second.

Although, the International Standard ISO-IEC 8802-11 does not define handover procedures per se for the well-known Institute of Electrical and Electronic Engineers (IEEE) 802.11 standard and variants thereof, the ISO-IEC 8802-11 standard does define mechanisms that can be used to implement a handover procedure at a network layer. In this respect, when a received signal strength at a mobile node supporting the IEEE 802.11 standard falls below a chosen threshold, it is appropriate to initiate a link layer handover procedure. The mobile node then scans available channels/frequencies for a new access point. If a new access point is found, the mobile node can choose to associate itself with the new access point and then perform a handover at the link layer by carrying out an authentication and association procedure of the IEEE 802.11 standard to establish link layer connections fully.

Once the IEEE 802.11 link layer handover is complete, a Mobile IPv6 network layer handover must be initiated. Request For Comments (RFC) 2461 entitled "Neighbor Discovery for IP Version 6 (IPv6)" (T. Norten, E. Nordmark, W. Simpson, www.faqs.org/rfcs/rfc2461) loosely describes the use of router advertisements and neighbour unreachability detection as one such mechanism for the detection at the network layer of movement of the mobile node. Thus, if the mobile node is, in a first instance, associated with a first router, but starts receiving router advertisement messages from a new, second, router and ceases to receive any router advertisement messages from the first router within a certain period of time, the mobile node infers that movement has occurred. A router solicitation message can also be sent by the mobile node to detect movement and initiate a handover at the network layer between the first and second routers. Once the mobile node is satisfied that movement has occurred, a duplicate address detection procedure is performed with a newly-formed care-of address and, assuming a duplicate of the newly-formed care-of address does not exist, the mobile node then proceeds to register, in accordance with a network layer handover procedure, the care-of address with a home agent of the mobile node and any Mobile IPv6-aware correspondent nodes of the mobile node.

The link layer and network layer handover procedures, however, operate independently of each other and, as acknowledged above, overall delay in completing both handover procedures, known as handover latency, constitutes a technical problem. Considering latency contributions from both the link layer and the network layer, the scanning for available channels at the link layer and the detection of movement at the network layer are main contributors to the handover latency.

Movement detection is a primary source of delay at the network layer and a function of a period of broadcast of the router advertisement messages as well as an algorithm that signals that movement has taken place.

In this respect, the process of scanning for channels at the link layer typically takes 250 ms, whereas the network layer movement detection process, using the "Neighbor Discovery" techniques referenced above, typically takes 2 or more seconds.

Known techniques to reduce the handover latency tend to use out-of-band messaging that requires external bespoke linkages between layers of a protocol stack or sending of additional UDP messages through the protocol stack, for example as described in "Link-Layer Triggers Protocol" (A. Yegin, draft-yegin-I2-triggers-OO.txt, http://ietfreport.isoc.org/). However, the introduction of a new protocol, such as the above-mentioned Link-Layer Triggers Protocol, to aid handover involves an undesirably large amount of modification to software/firmware of network devices as additional messages have to be sent through the protocol stack.

### Disclosure of Invention

According to a first aspect of the present invention, there is provided method of performing a handover, by a mobile node that supports a protocol stack having a link layer and a network layer, the method comprising: performing a link layer handover procedure in order to hand over from a first network node to a second network node in respect of communication with the link layer of the mobile node; receiving from the second network node a signalling datagram having a data structure definition associated therewith, receipt of the signalling datagram being indicative to the network layer of movement of the mobile node; incorporating trigger information in the signalling datagram in accordance with the data structure definition, the trigger information being incorporated at the link layer; communicating the signalling datagram incorporating the trigger information from the link layer to the network layer; and initiating a network layer handover procedure after receipt by the network layer of the signalling datagram incorporating the trigger information.

The first and second network nodes may each be capable of wireless communication with the mobile node.

Initiating the network layer handover procedure may result in initiation of the first network node handing over to the second network node in respect of communication with the network layer of the mobile node.

The link layer may be arranged to detect receipt of the signalling datagram subsequent to completion of the link layer handover procedure.

The network layer handover procedure may be in accordance with a Mobile IPv6 protocol.

The data structure definition may be an extendible schema.

The first network node may be a home node and the second network node may be a foreign node.

The first network node may be a foreign node and the second network node may be a home mode.

The initiation of the network handover procedure may be in response to receipt by the network layer of the signalling datagram incorporating the trigger information.

The signalling datagram may be stateless. The signalling datagram may be out-of-band.

The signalling datagram may be a router advertisement message.

The signalling datagram may be associated with assignment of a care-of address to the mobile node.

The trigger information may be incorporated into the signalling datagram by insertion of an Option into the signalling datagram. The Option may be an IPv6 Option.

The data structure definition may support an IPv6 Destination Options Extension Header.

The network layer may await receipt of at least one subsequent signalling datagram, corresponding to the received signalling datagram before initiating the network layer handover procedure.

The link layer may incorporate at least one subsequent trigger information in the at least one subsequent signalling datagram, respectively.

Initiation of the network layer handover procedure may include setting a Router Solicitation send timer to substantially zero in response to receipt by the network layer of the signalling datagram incorporating the trigger information.

According to a second aspect of the present invention, there is provided a computer program code element comprising computer program code means to make a computer execute the method as set forth above in relation to the first aspect of the invention. The computer program code element may be embodied on a computer readable medium.

According to a third aspect of the present invention, there is provided a communications system comprising: a mobile node supporting, when in use, a protocol stack, the protocol stack having a link layer and a network layer; a first network node arranged to communicate, when in use, with the mobile node; and a second network node capable of sending to the mobile node a signalling datagram having a data structure definition associated therewith; wherein the link layer is arranged to perform, when in use, a link layer handover procedure in order to hand over from the first network node to the second network node in respect of communication with the link layer, and to receive, when in use, the signalling datagram, receipt of the signalling datagram being indicative to the network layer of movement of the mobile node; the link layer is further arranged to incorporate trigger information in the signalling datagram in accordance with the data structure definition, and to communicate the signalling datagram incorporating the trigger information to the network layer; and the network layer is arranged to initiate a network layer handover procedure after receipt by the network layer of the signalling datagram incorporating the trigger information.

According to a fourth aspect of the present invention, there is provided a mobile node apparatus for communicating with a first network node and a second network node, the apparatus comprising: a protocol stack having a link layer arranged to perform, when in use, a link layer handover procedure for handing over from the first network node to the second network node in respect of communication with the link layer, and to receive, when in use, a signalling datagram having a data structure definition associated therewith, receipt of the signalling datagram being indicative to the network layer of movement of the mobile node; wherein the link layer is further arranged to incorporate, when in use, trigger information in the signalling datagram in accordance with the data structure definition, and to communicate the signalling datagram incorporating the trigger information to the network layer; and the network layer is arranged to initiate, when in use, a network layer handover procedure after receipt by the network layer of the signalling datagram incorporating the trigger information.

According to a fifth aspect of the present invention, there is provided a use of an extendible schema to provide an opaque object in a datagram, the opaque object providing a dependence between a network layer of a protocol stack and a link layer of the protocol stack.

It is thus possible to provide a method, apparatus and system that possess an implementation elegance that does not require extensive modification to existing network hardware, software or firmware in order to provide additional protocol messages. Additionally, a relatively small amount of information is transparently added to existing datagrams destined for the network layer of the mobile device, i.e. the additional information does not affect normal processing of the datagrams containing the additional information. It is also not necessary to provide additional, non-standard, linkages between the link layer and the network layer.

### Brief Description of Drawings

At least one embodiment of the invention will now be described, by way of example only, with reference to the accompanying drawings, in which:
**Figure 1** is a schematic diagram of a communications system constituting an embodiment of the invention;
**Figure 2** is a schematic diagram of a processing resource of a mobile node in the system of Figure 1;
**Figure 3** is an event-timing diagram of messages communicated in the system of Figure 1;
**Figure 4** is a flow diagram of use of packet modification to trigger a network layer handover procedure;
**Figure 5** a schematic diagram of a modified packet used in the system of Figure 1; and
**Figure 6** is a flow diagram of a method of modifying the packet of Figure 4.

### Detailed Description

Throughout the following description identical reference numerals will be used to identify like parts.

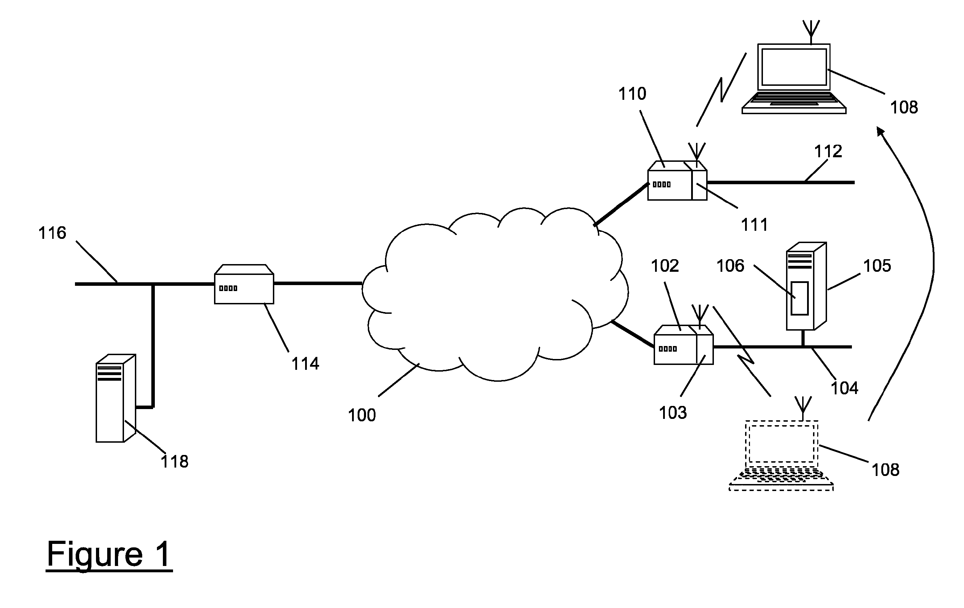

Referring to Figure 1, a communications network, for example the Internet 100, comprises a plurality of interconnected communications networks. As such, a first, home, wireless router 102, constituting a first network node, couples a Home Link 104, constituting a home subnet, to the Internet 100 via a first Internet Service Provider (ISP) (not shown). The Home Link 104 is coupled to a first computing apparatus, for example a server, constituting a Home Node 105, which executes network management software constituting a Home Agent 106. It should be appreciated that the Home Node 105 does not have to be the server, but can be any other suitable computing device that has necessary datagram forwarding and tunnelling capabilities, such as another router on the Home Link 104. In an initial state, a Mobile Node 108, for example a mobile computing device, such as a laptop computer, is attached to the Home Link 104 via the first wireless router 102.

Similarly, a second, foreign, wireless router 110, constituting a second network node, couples a Foreign Link 112, constituting a foreign subnet, to the Internet 100 via a second ISP (not shown). The Foreign Link 112 is also capable of communicating with the Mobile node 108, should the Mobile Node 108 migrate to the foreign subnet. In this example, the first wireless router 102 provides a first wireless coverage area (not shown) adjacent a second wireless coverage area (not shown) provided by the second wireless router 110. Both the first and second wireless routers support the IEEE 802.11 standard.

A third router 114 couples a Correspondent Link 116, constituting a correspondent subnet, to the Internet 100 via a third ISP (not shown). The Correspondent Link 116 is coupled to a Correspondent Node 118, for example a second computing apparatus, such as a second server, the Correspondent Node 118 having a need to communicate, for example, streamed media to the Mobile Node 108.

In the above example, the home wireless router 102 resides "behind" a first wireless access point 103 and the second wireless router 110 resides "behind" a second wireless access point 111.

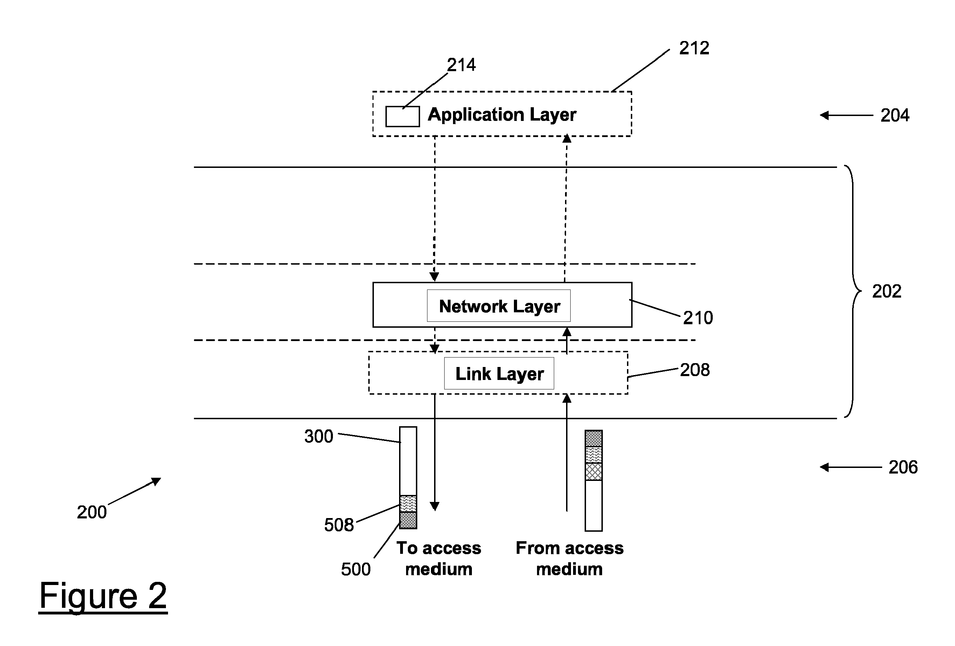

Referring to Figure 2, the mobile node 108 comprises a processing resource 200 consisting of, inter alia, at least one microprocessor (not shown), a volatile memory (not shown), for example a Random Access Memory (RAM), a non-volatile memory (not shown), for example a Read Only Memory (ROM). The processing resource 200 supports a kernel space 202, a part of the processing resource 200 reserved for supporting a protocol stack. In this example, the protocol stack is implemented according to appropriate layers in the Open System Interconnection (OSI) seven-layer Reference Model. Additionally, the processing resource 200 supports a user space 204, a part of the processing resource 200 reserved for the execution of user applications, for example a streamed media application. The processing resource 200 also supports an access medium interface 206, i.e. the Physical layer of the OSI seven-layer Reference Model.

In relation to the protocol stack, the protocol stack comprises, inter alia, a Link Layer 208, a Network Layer 210, as well as other upper layers, for example an Application Layer 212 (and other layers), and a Physical layer (not shown) below the Link Layer 208.

Amongst the applications residing in the user space 204, there is a streamed video application 214 for processing streamed media data content received from the second server 118.

A number of definitions, stateful structures and stateful code fragments reside in the kernel space 202 and constitute the Network Layer 210. In an analogous manner, a further number of definitions, stateful structures and stateful code fragments also reside in the kernel space 202 and constitute the Link Layer 208. The streamed video application 214 receives the streamed media data passed through the protocol stack.

In operation (Figure 1), the Mobile Node 108 is initially attached to the Home Link 104 by attachment of the Link Layer 208 and the Network Layer 210 to the first wireless router 102. At some point in time, it will be necessary to disconnect the Mobile Node 108 from the Home Link 104 and attach the Mobile Node 108 to the Foreign Link 112, thereby migrating the Mobile Node 108 from the home subnet to the foreign subnet. An example of the need to migrate the Mobile Node 108 is roaming from one part of a building to another.

When it is necessary to handover from the first wireless router 102 to the second wireless router 110, in order to migrate the Mobile Node 108 from the home subnet to the foreign subnet, it is necessary to use a handover mechanism involving the IEEE 802.11 standard and the Mobile IPv6 protocol. Further, the Mobile Node 108 is running one or more application that is intolerant to, or where the user is expected to be intolerant to, the effects of handover latency, for example, the streamed video application 214. It is therefore necessary to complete both a link layer handover procedure and a network layer handover procedure is as short a time as possible. Consequently, in order to reduce the handover latency, IPv6 extension headers, as described in RFC 2460 (www.ietf.org/rfc/rfc2460.txt), are used, for example a so-called Destination Options Extension Header, which allow additional information to be included between a main header and a payload of a packet. However, it should be appreciated that other known extendible schemas can be employed in relation to protocols other than IP if a performance parameter to be improved necessitates the use of extendible schemas of other protocols.

Use of opaque objects, such as extension headers, in this way requires modifications and extensions to the existing IPv6 protocol stack employed in the Mobile Node 108 in order to support the functionality described above in relation to Figure 2. In this example, a Unix environment is used with user-defined dynamically loadable kernel modules that interface with respective points in the kernel protocol stack via appropriately located kernel "hooks" that are pre-compiled into the kernel protocol stack. Alternatively, the modifications and extensions can be achieved by applying a patch to source code of the kernel protocol stack and then recompiling the kernel. In this respect, the kernel is adapted in accordance with European Patent publication no. EP-A-1 401 147 in order to provide support for incorporation of data into the extension header of a packet. However, whilst Unix-based kernels can be employed, it is possible to use dynamically linkable libraries, available for other kernels such as various versions of Microsoft^{®} Windows^{™}, to achieve the same functionality as described herein.

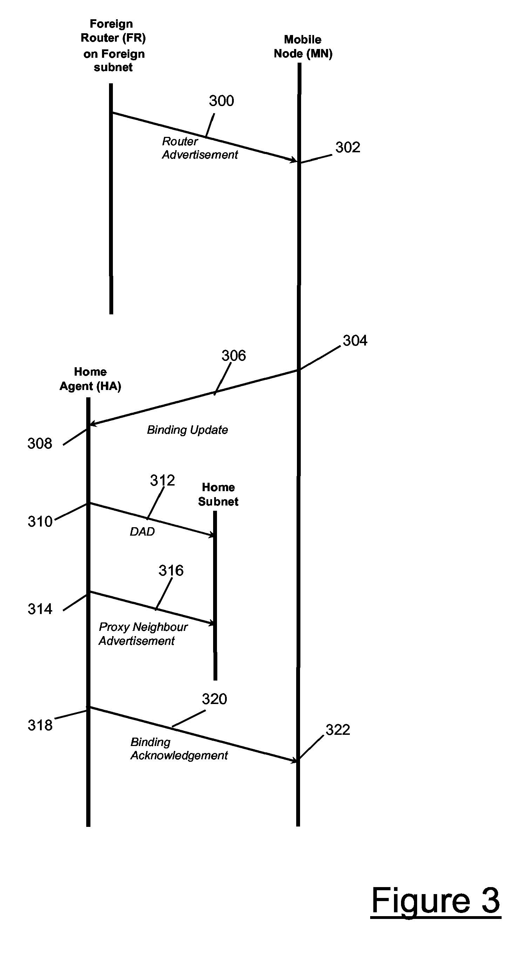

Turning to Figure 3, upon deciding that signal strength from the second wireless access point is greater than signal strength from the first wireless access point 103, the Link Layer 208 of the Mobile Node 108 performs the link layer handover procedure to attach the Link Layer 208 to the second wireless access point 111, i.e. hand over from the first network node 102 to the second network node 110 in respect of communication at the Link Layer 208, thereby beginning attachment of the Mobile Node 108 to the Foreign Link 112. Consequently, periodic broadcasts of a router advertisement packet (message) 300 transmitted by the second wireless router 111 in accordance with the Mobile IPv6 protocol are received (Step 302) by the Mobile Node 108. Over a period of time, multiple router advertisement messages are received by the Mobile Node 108, the receipt of a number of router advertisement messages being interpreted by a movement detection algorithm of the network layer 210 as movement by the Mobile Node 108 towards the second wireless router 111 and is a default behaviour for a Mobile IPv6 handover, i.e. execution of the network layer handover.

However, in order to obviate receipt of an unnecessary number of router advertisement messages that contribute significantly to the handover latency, the Network Layer 210 is able to use the fact that the Link Layer 208 has already performed the link layer handover procedure as confirmation of movement. Thus, whereas hitherto the Link Layer 208 and the Network Layer 210 have operated independently of each other, the Network Layer 210 now performs the network layer handover procedure in dependence of the Link Layer 208, and in particular in this example, execution of the link layer handover procedure.

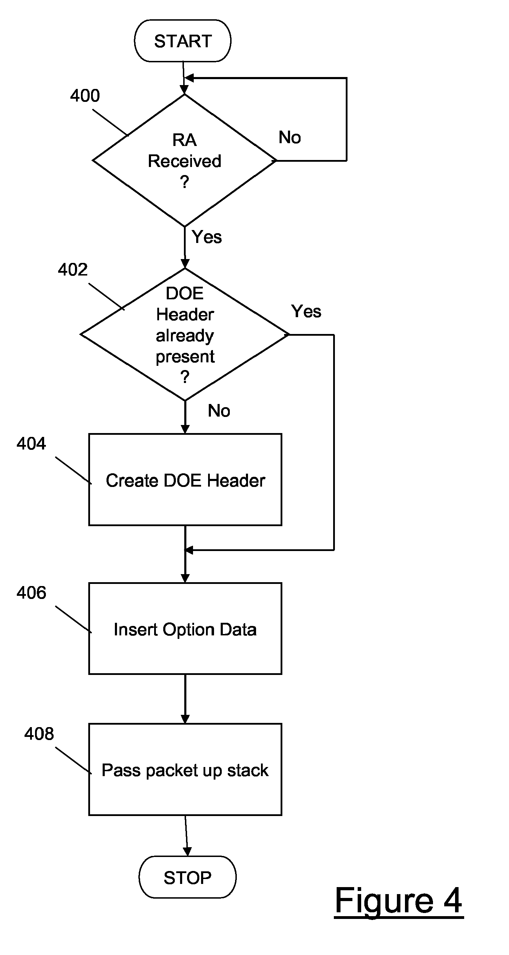

Referring to Figure 4, in order to provide the above-mentioned dependence between the Link Layer 208 and the Network Layer 210, the Link Layer 208 detects receipt (Step 400) of the router advertisement packet 300 received subsequent to performance of the Link Layer handover procedure. Consequently, the Link Layer 210 interrogates subsequent incoming packets in order to identify a first, i.e. first to be received, appropriate IPv6 router advertisement packet.

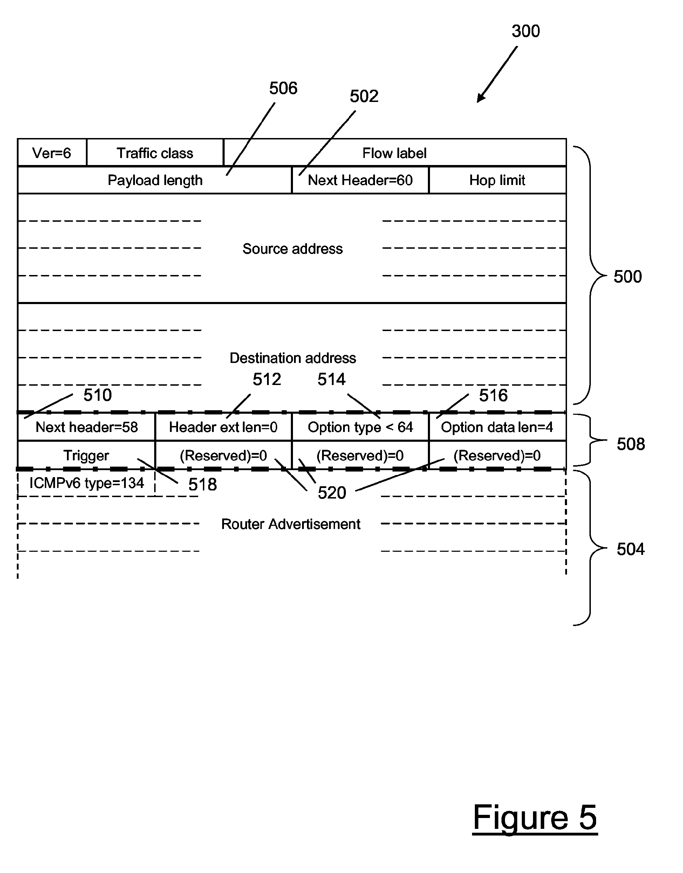

Referring to Figure 5, the IPv6 router advertisement packet 300 initially comprises a value of 58 (not shown) in a first next header field 502 of a header 500 of the router advertisement packet 300, and a value of 134 in a payload 504 of the router advertisement packet 300. Since, in this example, the router advertisement packet 300 is suitable for stateless address configuration (as described in RFC 2462), making the router advertisement packet 300 appropriate for manipulation by the Link Layer 208. Where stateless address configuration is supported, globally-routable IPv6 care-of addresses are provided. The Link Layer 208 therefore ignores inappropriate router advertisement packets.

Referring back to Figure 4, once the appropriate router advertisement packet 300 has been identified, the Link Layer 208 determines (Step 402) whether the router advertisement packet 300 comprises an IPv6 Destination Options Extension Header. Thereafter, the Link Layer 208 modifies (Step 404) the router advertisement packet 300 by altering the next header field 502 to a value of 60. A payload length field 506 of the header 500 of the router advertisement packet 300 is also modified to provide for the inclusion of the Destination Options Extension Header 508 in the router advertisement packet 300. The Destination Options Extension Header 508 is then populated (Step 406) with data.

Consequently, a second next header field 510 of the Destination Options Extension header 508 is assigned the value of 58 previously held by the first next header field 502 of the router advertisement packet 300, signifying an ICMPv6 payload message. A header extension length field 512 of the Destination Options Extension Header 508 is set to a value of 0, signifying an overall length of 8 bytes for the Destination Options Extension Header 508. An option type field 514 is set to a value between 0 and 63 available to identify the option type. An option data length field 516 is set to a value of 4, signifying that the option is 4 bytes in length. Since, in this example, the mere existence of the Destination Options Extension Header 508, constituting trigger information is sufficient to serve as a "signal" to the Network Layer 210 that the link layer handover procedure has been completed, a trigger one-byte field 518 and three subsequent reserved one-byte fields 520 are each set to a value of 0.

In the event that the router advertisement packet 300 already comprises the Destination Options Extension Header 508, it is only necessary to insert an additional IPv6 Option into the Destination Options Extension Header 508, the additional IPv6 Option containing the field values already described above.

Once modified as described above to incorporate the trigger information, the Link Layer 208 passes (Step 408) the router advertisement packet 300, now modified, to the Network Layer 210.

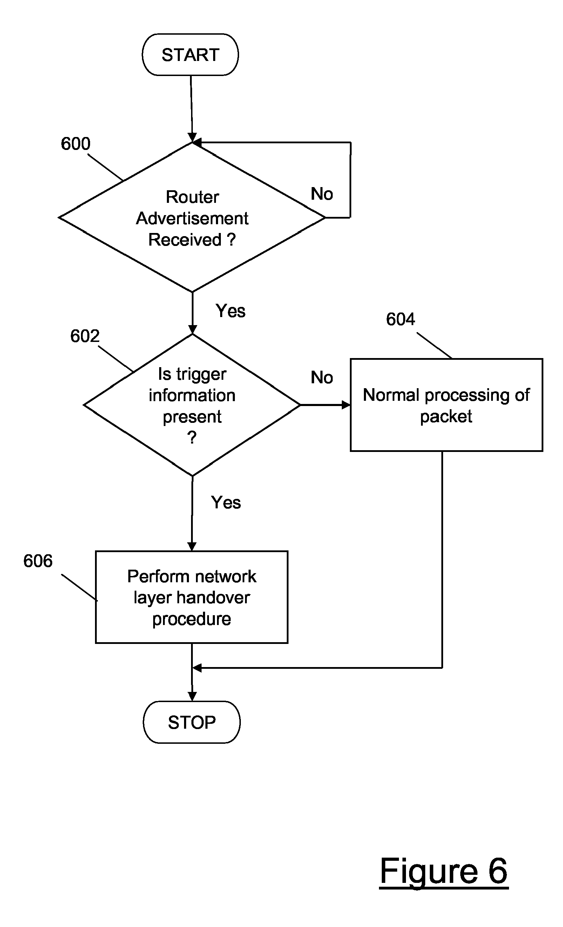

At the Network Layer 210 (Figure 6), the Network Layer 210 awaits (Step 600) receipt of the router advertisement packet 300 communicated by the Link Layer 208. Upon receipt of the router advertisement packet 300, the Network Layer 210 determines (Step 602) if the router advertisement packet 300 does not comprise the trigger information, in this example the Destination Options Extension Header 508 containing the IPv6 Option mentioned above, the Network Layer 210 proceeds to process (Step 604) the router advertisement packet 300 as a normal router advertisement packet.

However, if the router advertisement packet 300 is found by the Network Layer 210 to comprise the trigger information, the Network Layer 210 proceeds to execute the Network Layer handover procedure.

In this respect (and referring back to Figure 3), in response to receipt of the router advertisement packet 300, the Network Layer 210 of the Mobile Node 108 prepares and sends (Step 304) a Binding Update (BU) message 306 to the Home Agent 106 to register a care-of address for the Mobile Node 108 in accordance with the Mobile IPv6 network layer handover procedure.

Upon receipt (Step 308) of the BU message 306 and as part of the Mobile IPv6 network layer handover procedure, the Home Agent 106 creates a new entry in a binding cache (not shown) of the Home Agent 106 to associate a home address of the Mobile Node 108 with the care-of address.

In response to receipt (Step 308) of the BU message 306, the Home Agent 106 then sends (Step 310) a Duplicate Address Detection (DAD) message 312 on the home subnet. Assuming a duplicate address to the care-of address has not been detected, the Home Agent 106 then sends (Step 314) a Proxy Neighbour Advertisement (PNA) message 316 on the home subnet.

Subsequently, the Home Agent prepares and sends (Step 318) a Binding Acknowledgement message 320 to the Mobile Node 108 to signal to the Mobile Node 108 the formation of a valid binding association.

The Binding Acknowledgement message 320 is then received (Step 322) by the Network Layer 210 of the Mobile Node 108, completing the network layer handover procedure.

In another embodiment, a parameter, for example a parameter associated with a number of received router advertisements threshold, of the network layer handover procedure is set in order to force initiation of the network layer handover in response to receipt of, for example, a first router advertisement packet as opposed to a larger number of router advertisement packets. Alternatively, a timer associated with the sending of Router Solicitation packets can be set to substantially zero, thereby causing a subsequent router advertisement packet received after the modified router advertisement packet 300 to initiate the network layer handover procedure.

In a further embodiment, the network layer 210 can await receipt of a number of modified router advertisement packets (300) before initiating the network layer handover procedure.

Although the above examples have been described in the context of packet communications, it should be appreciated that the term "message" is intended to the construed as embracing packets, datagrams, frames, cells and/or protocol data units and so these terms should be understood to be interchangeable.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of performing a handover, by a mobile node that supports a protocol stack having a link layer and a network layer, the method comprising:
performing a link layer handover procedure in order to hand over from a first network node to a second network node in respect of communication with the link layer of the mobile node;
receiving from the second network node a signalling datagram having a data structure definition associated therewith, receipt of the signalling datagram being indicative to the network layer of movement of the mobile node;
incorporating trigger information in the signalling datagram in accordance with the data structure definition, the trigger information being incorporated at the link layer;
communicating the signalling datagram incorporating the trigger information from the link layer to the network layer; and
initiating a network layer handover procedure after receipt by the network layer of the signalling datagram incorporating the trigger information.

2. A method as claimed in claim 1, wherein the first and second network nodes are each capable of wireless communication with the mobile node.

3. A method as claimed in Claim 1 or Claim 2, wherein initiating the network layer handover procedure results in initiation of the first network node handing over to the second network node in respect of communication with the network layer of the mobile node.

4. A method as claimed in any one of the preceding claims, wherein the link layer is arranged to detect receipt of the signalling datagram subsequent to completion of the link layer handover procedure.

5. A method as claimed in any one of the preceding claims, wherein the network layer handover procedure is in accordance with a Mobile IPv6 protocol.

6. A method as claimed in any one of the preceding claims, wherein the data structure definition is an extendible schema.

7. A method as claimed in any one of the preceding claims, wherein the signalling datagram is stateless.

8. A method as claimed in any one of the preceding claims, wherein the signalling datagram is out-of-band.

9. A method as claimed in any one of the preceding claims, wherein the signalling datagram is a router advertisement message.

10. A method as claimed in any one of the preceding claims, wherein the signalling datagram is associated with assignment of a care-of address to the mobile node.

11. A method as claimed in any one of the preceding claims, wherein the trigger information is incorporated into the signalling datagram by insertion of an Option into the signalling datagram.

12. A method as claimed in any one of the preceding claims, wherein the data structure definition supports an IPv6 Destination Options Extension Header.

13. A method as claimed in any one of the preceding claims, wherein the network layer awaits receipt of at least one subsequent signalling datagram, corresponding to the received signalling datagram before initiating the network layer handover procedure.

14. A method as claimed in Claim 14, wherein the link layer incorporates at least one subsequent trigger information in the at least one subsequent signalling datagram, respectively.

15. A method as claimed in any one of the preceding claims, wherein initiation of the network layer handover procedure includes setting a Router Solicitation send timer to substantially zero in response to receipt by the network layer of the signalling datagram incorporating the trigger information.

16. A computer program code element comprising computer program code means to make a computer execute the method as claimed in any one of Claims 1 to 15.

17. A computer program code element as claimed in Claim 16, embodied on a computer readable medium.

18. A communications system comprising:
a mobile node supporting, when in use, a protocol stack, the protocol stack having a link layer and a network layer;
a first network node arranged to communicate, when in use, with the mobile node; and
a second network node capable of sending to the mobile node a signalling datagram having a data structure definition associated therewith; wherein
the link layer is arranged to perform, when in use, a link layer handover procedure in order to hand over from the first network node to the second network node in respect of communication with the link layer, and to receive, when in use, the signalling datagram, receipt of the signalling datagram being indicative to the network layer of movement of the mobile node;
the link layer is further arranged to incorporate trigger information in the signalling datagram in accordance with the data structure definition, and to communicate the signalling datagram incorporating the trigger information to the network layer; and
the network layer is arranged to initiate a network layer handover procedure after receipt by the network layer of the signalling datagram incorporating the trigger information.

19. A mobile node apparatus for communicating with a first network node and a second network node, the apparatus comprising:
a protocol stack having a link layer arranged to perform, when in use, a link layer handover procedure for handing over from the first network node to the second network node in respect of communication with the link layer, and to receive, when in use, a signalling datagram having a data structure definition associated therewith, receipt of the signalling datagram being indicative to the network layer of movement of the mobile node; wherein
the link layer is further arranged to incorporate, when in use, trigger information in the signalling datagram in accordance with the data structure definition, and to communicate the signalling datagram incorporating the trigger information to the network layer; and
the network layer is arranged to initiate, when in use, a network layer handover procedure after receipt by the network layer of the signalling datagram incorporating the trigger information.

20. A use of an extendible schema to provide an opaque object in a datagram, the opaque object providing a dependence between a network layer of a protocol stack and a link layer of the protocol stack.
